# EUROPEAN PATENT SPECIFICATION

(11) **EP 2 595 261 B1**
(45) Date of publication and mention of the grant of the patent: **11.02.2015**
(21) Application number: 11189932.4
(22) Date of filing: 21.11.2011
(51) Int. Cl.: H02B 11/133

(54) **Interlocking device for a switchgear**
Verriegelungsvorrichtung für ein Schaltgetriebe
Dispositif d'interverrouillage pour un appareillage

(43) Date of publication of application: 22.05.2013
(73) Proprietor: ABB Technology AG, 8050 Zürich (CH)
(72) Inventor: Carelli, Vittorio, 26900 Lodi (IT); Peracchi, Fabrizio, 24121 Albino (BG) (IT)
(74) Representative: Crugnola, Pietro

(56) References cited:
- EP-A2- 0 226 532
- DE-A1- 4 122 740
- DE-U1- 9 000 374
- US-A1- 2002 100 667

## Description

The present invention relates to an interlocking device for a switchgear, in particular for a door of a switchgear comprising a draw-out circuit breaker.

It is known in the art a switchgear including a draw-out circuit breaker which is supported by a trolley or truck slidable along stationary horizontal rails within a compartment of the switchgear.

The trolley, which is coupled to a worm-screw drivable by a handle, can be moved within the abovementioned compartment from an extracted-non-operative position, in which movable electric contacts of the circuit breaker are disengaged from stationary contacts included in the switchgear, to an inserted-operative-position, in which the movable electric contacts engage with the respective stationary electric contacts. The switchgear is provided with a door for allowing/preventing access to the abovementioned compartment. Although known switchgear devices perform in a quite satisfying way, there is still room for further improvements, in particular as regard to increasing safety when operators are requested to open the door and intervene on the components inside the switchgear cabinet.

This issue is faced by an interlocking device as defined in the appended claims and described hereinafter in details.

The present disclosure encompasses also a switchgear casing provided with said interlocking device, and a switchgear, equivalently called with the term panel or cabinet or switchboard, comprising a draw-out circuit breaker and said interlocking device as well.

US2002/0100667 shows an automatically operating interlock device which provides a levering in block controlled by a threaded rod to move a circuit breaker from the operative position to the non-operative position and vice versa, a cam pivotally secured near the forwardmost position of the levering in block, and a locking bar pivotally secured to the cam. The cam is biased so that the locking bar engages the cabinet door. When the levering in block is moved to its forwardmost position, it engages the cam, rotating the cam to withdraw the locking bar from the door.

Characteristics and advantages of the present disclosure will result from the description and from claims.

The present disclosure can be better understood and implemented with reference to the attached drawings that illustrate some embodiments thereof by way of non-limiting examples, in which:
Figure 1 is a fragmentary and cutaway view of a switchgear provided with an interlocking device according to the invention, the interlocking device being in an unlocking position;
Figure 2 is a fragmentary view showing, from another perspective, part of the switchgear with the interlocking device in the unlocking position;
Figures 3 and 4 are fragmentary and cutaway views like Figure 1 and 2 but with a door in closed position and the interlocking device in a locking position;
Figure 5 shows the interlocking device in the locking position from an internal side of the switchgear, the door having been removed for making internal parts visible;
Figures 6 and 7 are a perspective and a top view of a locking unit of the interlocking device, respectively;
Figures 8 and 9 are different perspective views of a drive unit of the interlocking device, connected to a rail element of the switchgear;
Figure 10 shows in detail part of the drive unit which interacts with the locking unit;
Figure 11 is a side view of the drive unit connected to the rail element;
Figure 12 is a section view taken along the line XII-XII in Figure 11;
Figure 13 is a top view of the drive unit in Figure 11.

It should be noted that in the detailed description that follows, in order to clearly and concisely disclose the present invention, the drawings may not necessarily be to scale and certain features of the disclosure may be shown in somewhat schematic form.

With reference to the attached Figures, an interlocking device 1 is shown, which is suitable for being mounted in a switchgear 2, in particular, but in a non limitative way, in a medium-voltage switchgear including a draw-out circuit breaker 3, where, for the purposes of the present application, the term medium voltage refers to applications in the range from 1kV up to some tens of kV, e.g. 36 kV. The interlocking device 1 is configured for locking/unlocking a door 4 whose function is to allow/prevent access to a compartment 5 of the switchgear 2 housing the draw-out circuit breaker 3.

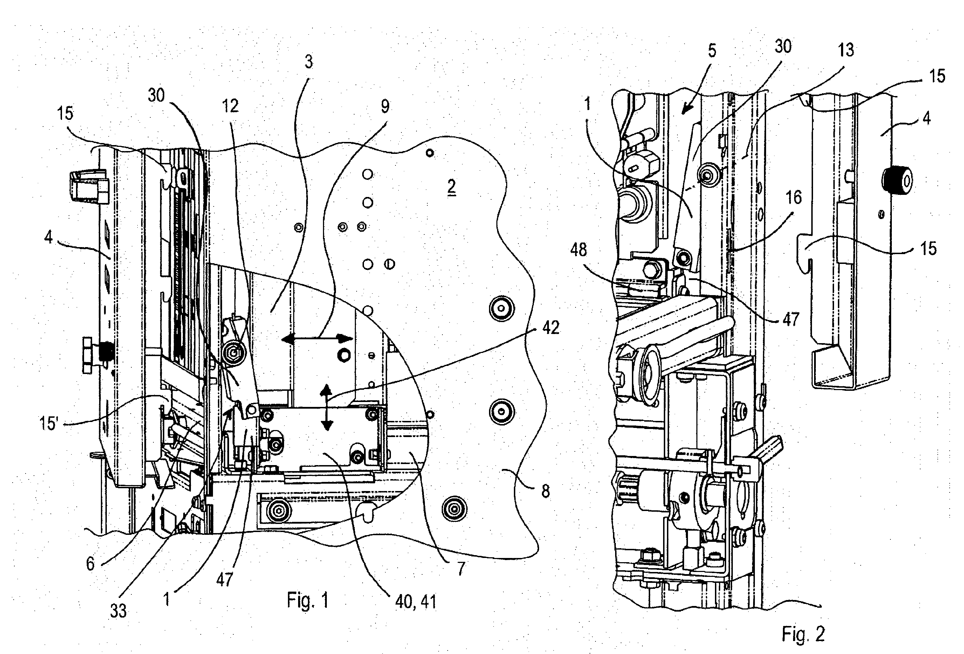

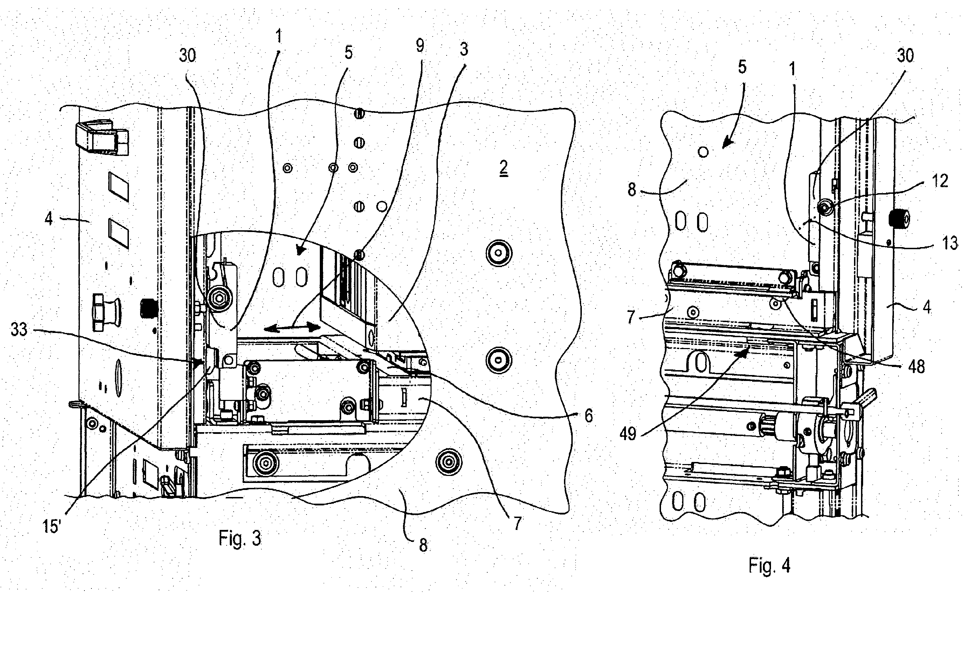

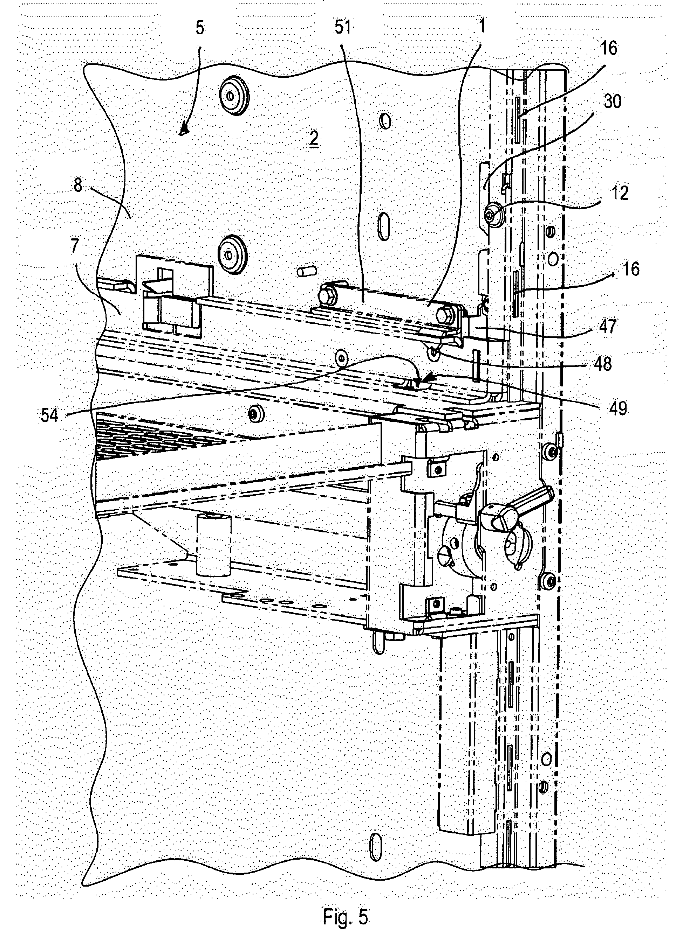

The door 4, on a first vertical edge, is hinged to a casing or cabinet 8 of the switchgear 2, and is provided, on a second vertical edge opposite to the first vertical edge, with one or more hooks 15. The hooks 15 are configured for engaging, in a closed position of the door 4 (see e.g. figures 3, 4), with corresponding stationary openings 16 (visible in Figures 2 and 5) provided on a frame element, e.g. a vertical upright, of the casing 8. In the exemplary embodiments illustrated, the door 4, in the closed position, is lowered in such a way that the hooks 15 engage with the corresponding openings 16. The door 4, in order to be opened, should first be lifted for disengaging the hooks 15 from the openings 16, and then rotated. The locking device 1, as better described in the following, prevents the door 4 from being lifted up, and therefore from being opened when the circuit breaker 3 is not in the extracted-non-operative position.

The draw-out circuit breaker 3 is supported by a trolley 6 which is for example slidable along a pair of stationary horizontal rails 7 within the compartment 5. The horizontal rails 7 are internally fixed to the casing 8 of the switchgear 2.

The trolley 6, which is coupled to a worm-screw drivable by a handle, can be moved within the above mentioned compartment 5 from an extracted-non-operative position, shown in Figures 1 and 2, in which connection electric contacts of the draw-out circuit breaker 3 are disengaged from corresponding stationary contacts included in the switchgear 2, to an inserted-operative-position, shown in Figures 3 and 4, in which the connection electric contacts engage with the respective stationary electric contacts.

Such stationary contacts allow to electrically insert the circuit breaker 3 between an upstream electrical source and a downstream supplied load.

The trolley 6 is movable from the extracted-non-operative position to the inserted-operative-position along a direction 9 by means of wheels 11 which run each along a respective rail 7.

The interlocking device 1 comprises a locking unit 30, movable between an unlocking position (shown in Figures 1, 2) and a locking-position (shown in Figures 3 to 5) for preventing and allowing opening of the door 4, respectively. The interlocking device 1 further comprises a driving unit 40 arranged for driving the locking unit 30. The driving unit 40, as better described in the following, acts, upon a movement of the trolley 6, for moving the locking unit 30 in the unlocking position when the draw-out circuit breaker 3 is brought in the extracted-non-operative position.

The locking unit 30 is pivotally connected to a frame member of the switchgear, e.g. an upright portion of the casing 8, by a hinge 12. The locking unit 30 rotates around a rotation axis 13 between the unlocking position and the locking-position. The rotation axis 13 extends transversely to a sliding movement of the trolley 6. In particular, the rotation axis 13 is horizontally arranged.

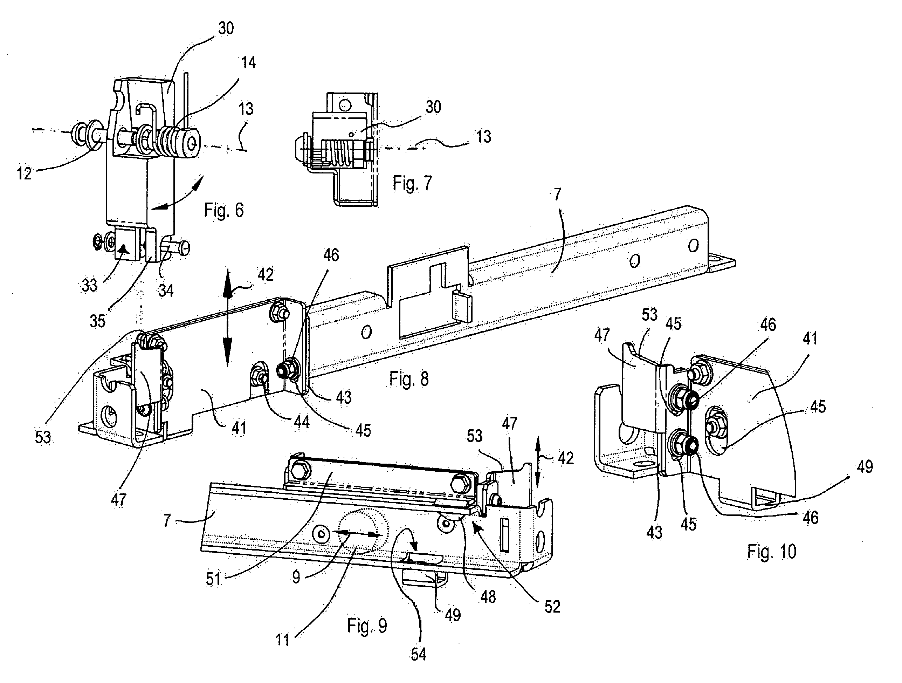

A torsion spring 14 (better shown in Figure 6), arranged around the rotation axis 13, is provided for urging the locking unit 30 in the locking-position. The locking unit 30 is configured for coupling with one of the hooks 15 when the door 4 is in the closed position. In particular, on the locking unit 30 there is provided a locking seat 33 which, when the door 4 is in the closed position, and the locking unit 30 is in the locking position, receives a hook 15' and blocks movement thereof vertically and upwards. Therefore, the door 4 in such a configuration cannot be opened. The locking unit 30 comprises, at a lower end, a forked portion 35 through which a pin portion 34 extends substantially parallel to the rotation axis 13. The pin portion 34 is arranged for going into contact with the driving unit 40.

The driving unit 40, better shown in Figure 8 to 13, comprises a movable body 41, e.g. a sliding body 41, which can be obtained from a metal plate in one or more pieces, and which is movable, for example vertically, along a driving direction 42, i.e. transversely with respect to a path of the wheel 11 along the rail 7. The movable body 41 is movable between a raised position corresponding to the unlocking position of the locking unit 30, and a lowered position, which enables the locking unit 30 to achieve the locking position.

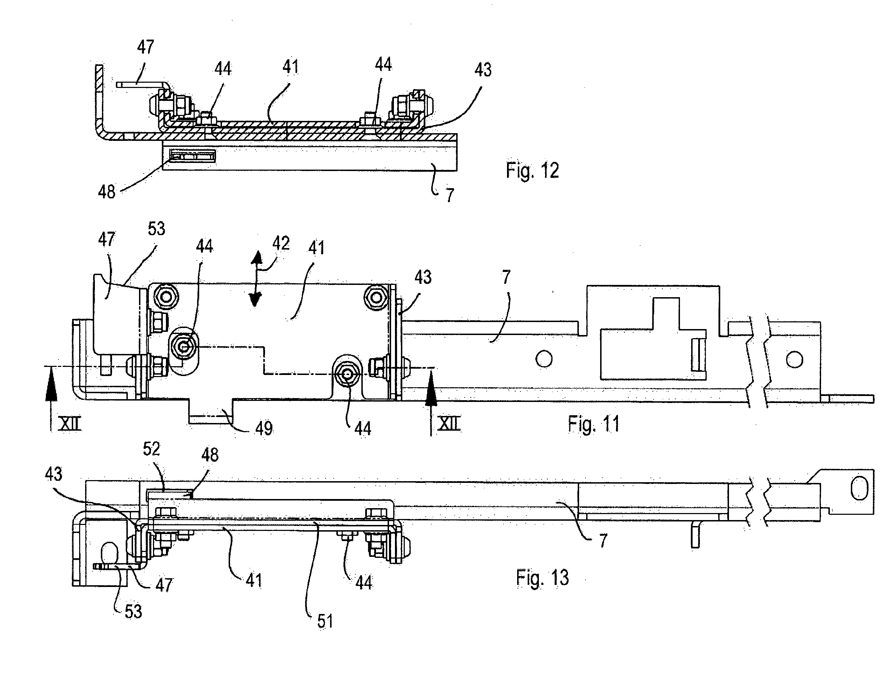

The movable body 41 is movable upwards for exerting a pushing action on the pin portion 34 of the locking unit 30 in order to keep the locking unit 30 in the unlocking-position when the circuit breaker 3 is in the extracted-non-operative position. The movable body 41 is movably, e.g. slidably, coupled to a stationary guide-counter-plate 43, which, in a plane view (Figures 12 and 13) has a C-shape, and which is stationarily fixed to one of the rails 7 through suitable screws 44.

A coupling arrangement comprising slot-openings 45 - provided on the movable body 41 - and coupling screws 46 extending through said slot-openings 45 and fixed to the guide-counter-plate 43, enables the movable body 41 to move, e.g to slide, with respect to the guide guide-counter-plate 43. There are provided suitable spacer and washer elements for ensuring a correct sliding movement of the movable body 41 relative to guide-counter-plate 43.

The movable body 41 comprises a pushing portion 47 configured for exerting the above mentioned pushing action directly on the pin portion 34 of the locking unit 30. The pushing portion 47 has the shape of a plate portion lying in a plane orthogonal to the rotation axis 13 and comprises an upper pushing edge 53 intended to press against the pin portion 34 when the movable body 41 moves to the raised position. The pushing portion 47 has a thickness such that it can penetrate in the gap defined in the forked portion 35, making the upper pushing edge 53 contact the pin portion 34.

The upper pushing edge 53 is slightly tilted downwards according to a direction pointing to the interior of the switchgear 2. Owing to this configuration, when the pushing portion 47 is raised, the pin portion 34, under the pushing action, can easily slide on the upper pushing edge 53 until the unlocking position is reached. A lever arm offset of the pin portion 34 relative to the rotation axis 13 facilitates rotation of the locking unit 30 to the unlocking position. The driving unit 40 comprises a first follower portion 48 and a second follower portion 49 fixed to the movable body 41 in an upper zone and a lower zone of the latter, respectively. In other words, the first follower portion 48 is arranged at a higher quote than the second follower portion 49.

The first follower portion 48 and the second follower portion 49 are shaped for interacting with the wheel 11 from above and from below in order to move the movable body 41 upwards and downwards respectively.

The first follower portion 48 protrudes from a plate portion 51 fixed to the movable body 41 and is bent downwards, whereas the second follower portion 49 protrudes from a lower edge of the movable body 41 and is bent upwards. The first follower portion 48 and the second follower portion 49 may alternatively partially penetrate, from opposite side, inside the rail 7, where they can intercept the wheel 11.

The first follower portion 48, when the movable body 41 is in the lowered position, protrudes in the rail 7 through a passage opening 52 of the latter. In such a configuration, the first follower portion 48 is ready for receiving an upward push by the wheel 11.

On the contrary, when the movable body 41 is in the raised position, the first follower portion 48 is substantially withdrawn out of the rail 7. In such a configuration, the second follower portion 49 protrudes from below inside the rail 7 through a further passage opening 54 of the latter. The second follower portion 49 so positioned is ready for receiving a downward push by the wheel 11. On the contrary, when the movable body 41 is in the lowered position, the second follower portion 49 is substantially withdrawn out of the path of the wheel 7.

The first follower portion 48 is located at a stroke-end position of the wheel 11, corresponding to the extracted-non-operative position of the circuit-breaker 3, whereas the second follower portion 49 is spaced from said stroke-end position and is located in the casing 8 more internally than the first follower portion 48.

Functioning of the interlocking device 1 is described in the following.

When the circuit breaker 3 is in the extracted-non operative position, the wheel 11 of the trolley 6 is in the stroke-end position and keeps the movable body 41 in the raised position through the upwards pushing action applied to the first follower portion 48, which is in a high position. In such a configuration, the pushing portion 47, by pressing on the pin portion 34, keeps the locking unit 30 rotated in the unlocking position, by overcoming the action of the torsion spring 14. In this configuration, the locking seat 33 is moved away from the hook 15' and thus the door 4 can be freely opened. Once the door 4 is closed, and the hook 15' is housed in the corresponding opening 16, the trolley 6 can be driven towards the inserted-operative position. As the wheel 11 moves away from the stroke-end position, the first follower portion 48 is released, and therefore the pushing portion 47 is lowered owing to the return elastic action of the torsion spring 14 which rotates the locking unit 30 to the locking position. Furthermore, the wheel 11, by subsequently pushing down the second follower portion 49, promotes lowering of the movable body 41 and release of the locking unit 30. The second follower portion 49 remains in a lowered position out of the path of the wheel 11, whereas the first follower portion 48 protrudes inside the rail 7, ready to interact with the wheel 11 in a next extraction operation of the circuit breaker 3.

As the locking unit 30 reaches the locking position, any movement of the hook 15' and thus of the door 4 is blocked. Therefore, a dangerous opening of the door 4 is already made impossible even before the circuit breaker 3 reaches the inserted-operative position.

In this way, even a rash or careless operator has no possibilities to open the door 4 - unless he brings the circuit breaker 3 again in the extracted-non-operative position - and he is prevented from accessing to high voltage components which are on load.

When access to the compartment 5 is required, first the trolley 6 with the circuit breaker 3 has to be transferred to the extracted-non operative position. As the trolley 6 approaches the extracted-non operative position, the wheel 11 intercepts the first follower portion 48 and pushes it upwards, thus causing the slide body 41 to rotate the locking unit 30 in the unlocking position. The door 4 is therefore unlocked and can be opened in totally safe conditions.

The interlocking device 1 above discussed fully achieves the intended aim of providing a technical solution which makes a switchgear highly reliable and safer.

The interlocking device 1 is susceptible of modifications or variations all within the scope of the inventive concept as defined by the appended claims and including any combination of the above described embodiments; and any details may be replaced with technically equivalent elements.

For example, the various elements before described, e.g. the movable body 41 and/or the guide counter plate 43, may be differently shaped and/or positioned, can be realized in one or more pieces or differently coupled or positioned, et cetera.

In practice, the materials, so long as they are compatible with the specific use, as well as the individual components, may be any according to the requirements and the state of the art.

## Claims

1. Interlocking device (1) suitable for a door (4) of a switchgear (2) having a draw-out circuit breaker (3), comprising:
- a locking unit (30) movable between a locking position and an unlocking-position for preventing and allowing opening of said door (4), respectively,
- a driving unit (40) arranged for acting on said locking unit (30) upon a movement of said draw-out circuit breaker (3),
- said driving unit (40) being configured for placing said locking unit (30) in said unlocking-position when said draw-out circuit breaker (30) is in an extracted-non-operative-position, and for enabling positioning of said locking unit (30) in said locking position upon a movement of said draw-out circuit breaker (3) from said extracted-non-operative-position towards an inserted-operative-position,
**characterized in that** said driving unit (40) comprises a movable body (41) for exerting a pushing action on said locking unit (30) for keeping said locking unit (30) in said unlocking-position, said movable body (41) comprising follower means (48, 49) suitable for being displaced by wheel means (11) of a trolley (6) supporting said draw-out circuit breaker (3), said movable body (41) being movable along a driving direction (42) transversely with respect to a path of the wheel means (11) along a rail element (7) between a raised position corresponding to the unlocking position of the locking unit (30), and a lowered position which enables the locking unit (30) to achieve the locking position.

2. Interlocking device according to claim 1, wherein said locking unit (30) is pivotally movable, between said locking position and said unlocking-position, around a hinge (12) which is connectable to a frame element of said switchgear (2) transversely to a sliding direction of said draw-out circuit breaker (3), spring means (14) being provided for urging said locking unit (30) in said locking position.

3. Interlocking device according to claim 2, wherein said locking unit (30) is configured for coupling with hook means (15') of said door (4) when said door (4) is in a closed position, said hook means (15') in said closed position engaging with stationary opening means (16) provided on said switchgear (2).

4. Interlocking device according to claim 3, wherein on said locking unit (30) there is provided a locking seat (33) which is shaped for housing and blocking said hook means (15') in order to prevent lifting up and opening of said door (4).

5. Interlocking device according to one or more of the preceding claims, wherein said movable body (41) is slidably coupled to a stationary guide-counter-plate (43) which is fixable to the rail element (7) along which said wheel means (11) move.

6. Interlocking device according to claim 5, wherein on said movable body (41) there are provided slot-openings (45) which house coupling screw means (46) through which said movable body (41) is slidably connected to said guide-counter-plate (43).

7. Interlocking device according to one or more of claims 4 to 6, wherein said follower means comprise a first follower portion (48) and a second follower portion (49) movable in an upper region and in a lower region of said rail element (7), respectively, said first follower portion (48) being arranged for receiving an upwards push by said wheel means (11) in order to urge said locking unit (30) in said unlocking-position, and said second follower portion (49) being arranged for receiving a downwards push by said wheel means (11) in order to release said locking unit (30) by ceasing said pushing action thus allowing said locking unit (30) to reach said locking position.

8. Interlocking device according to claim 7, wherein said first follower portion (48) is located at a stroke-end position of said wheel means (11) corresponding to said extracted-non-operative position of said circuit-breaker (3), and said second follower portion (49) is spaced from said stroke-end position towards the interior of said switchgear (2).

9. Interlocking device according to claim 8, wherein said first follower portion (48) and said second follower portion (49) are movable for partially protruding into said rail element (7) through respective passage openings (52, 54) of the latter in order to contact, one at a time, said wheel means (11).

10. Interlocking device according to one or more of the preceding claims, wherein said movable body (41) comprises a pushing portion (47) having a tilted edge (53) configured for exerting said pushing action on a pin portion (34) of said locking unit (30), said pin portion (34) extending parallel to a rotation axis (13) of said hinge (12).

11. Interlocking device according to claim 10, wherein said locking unit (30) comprise a fork-end-portion (35) through which said pin portion (34) extends, said fork-end-portion (35) defining a gap for receiving said pushing portion (47).

12. Interlocking device according to one or more of claims 2 to 9, wherein said spring means comprises a torsion-spring (14) arranged around said hinge (12).

13. Switchgear casing (8) suitable for housing a draw-out circuit breaker (3) and comprising an interlocking device (1) according to one or more of preceding claims.

14. Switchgear apparatus comprising a draw-out circuit breaker (3) and an interlocking device (1) according to one or more of preceding claims.

## Patentansprüche

1. Für eine Tür (4) geeignete Verriegelungsvorrichtung eines schaltbaren Getriebes (2) mit einem ausziehbaren Unterbrecher (3), mit:
- einer Verriegelungseinheit (30), die zwischen einer verriegelten Position und einer entriegelten Position beweglich ist, um das Öffnen der Tür (4) zu verhindern bzw. zu erlauben,
- einer Antriebseinheit (40), die angeordnet ist, um auf die Verriegelungseinheit (30) bei einer Bewegung des ausziehbaren Unterbrechers (3) einzuwirken,
- wobei die Antriebseinheit (40) dazu ausgebildet ist, die Verriegelungseinheit (30) in die entriegelte Position zu platzieren, wenn der ausziehbare Unterbrecher (30) in einer ausgezogenen, nicht wirksamen Position ist, und das Positionieren der Verriegelungseinheit (30) in die verriegelte Position bei einer Bewegung des ausziehbaren Unterbrechers (3) aus der ausgezogenen nicht aktiven Position in eine eingezogene Betriebsposition zu positionieren,
**dadurch gekennzeichnet, dass** die Antriebseinheit (40) einen beweglichen Körper (41) zum Ausüben einer Druckwirkung auf die Verriegelungseinheit (30) aufweist, um die Verriegelungseinheit (30) in der entriegelten Position zu halten, wobei der bewegliche Körper (41) ferner Folgermittel (48, 49) aufweist, die dazu ausgebildet sind, von den Rädermitteln (11) eines Wagens (6), der den ausziehbaren Unterbrecher (3) aufnimmt, verschoben zu werden, wobei der bewegliche Körper (41) entlang einer Fahrrichtung (42) quer in Bezug auf einen Weg der Rädermittel (11) entlang eines Schienenelementes zwischen einer erhabenen Position, die der entriegelten Position der Verriegelungseinheit (30) entspricht, und einer abgesenkten Position, die es der Verriegelungseinheit (30) erlaubt, die Verriegelungsposition zu erreichen, beweglich ist.

2. Verriegelungsvorrichtung nach Anspruch 1, wobei der die Verriegelungseinheit (30) schwenkmäßig zwischen der verriegelten Position und der entriegelten Position um ein Scharnier (12) beweglich ist, das mit einem Rahmenelement des Schaltgetriebes (2) quer zu einer Gleitrichtung des ausziehbaren Unterbrechers (3) verbindbar ist, wobei Federmittel (14) vorgesehen sind, um die Verriegelungseinheit (30) in die verriegelte Position zu beaufschlagen.

3. Verriegelungsvorrichtung nach Anspruch 2, bei der die Verriegelungseinheit (30) dazu ausgebildet ist, mit Hakenmitteln (15') der Tür (4) zu koppeln, wenn die Tür (4) in einer geschlossenen Position ist, wobei die Hakenmittel (15') in der geschlossenen Position an einem stationären Öffnungsmittel (16) angreifen, das an dem Schaltgetriebe (2) vorgesehen ist.

4. Verriegelungsvorrichtung nach Anspruch 3, bei der die Verriegelungseinheit (30) mit einem Verriegelungssitz (33) versehen ist, der dazu geformt ist, die Hakenmittel (15') aufzunehmen und zu blockieren, um zu verhindern, dass die Tür (4) angehoben und geöffnet wird.

5. Verriegelungsvorrichtung nach irgendeinem der vorhergehenden Ansprüche, bei der der bewegliche Körper (41) gleitmäßig mit einer stationären Führungsgegenplatte (43) gekoppelt ist, die an dem Schienenelement (7) festlegbar ist, entlang dessen sich die Rädermittel (11) bewegen.

6. Verriegelungsvorrichtung nach Anspruch 5, bei der auf dem beweglichen Körper (41) Schlitzöffnungen (45) vorgesehen sind, die Verbindungsschraubenmittel (46) aufnehmen, durch die der bewegliche Körper (41) gleitmäßig mit der Führungsgegenplatte (43) verbunden ist.

7. Verriegelungsvorrichtung nach einem oder mehreren der Ansprüche 4 bis 6, bei der die Folgermittel einen ersten Folgerbereich (48) und einen zweiten Folgerbereich (49) aufweisen, die in einem oberen Bereich und einem unteren Bereich bzw. in einem unteren Bereich des Schienenelementes (7) beweglich sind, wobei der erste Folgerbereich (48) dazu ausgebildet ist, einen Druck nach oben von den Rädermitteln (11) zu erhalten, um die Verriegelungseinheit (30) in die entriegelte Position zu beaufschlagen, und wobei der zweite Folgerbereich (49) dazu ausgebildet ist, von den Rädermitteln (11) einen Druck nach unten zu erhalten, um die Verriegelungseinheit (30) freizugeben, indem die Druckwirkung beendet wird, um es so der Verriegelungseinheit (30) zu erlauben, die verriegelte Position zu erreichen.

8. Verriegelungsvorrichtung nach Anspruch 7, bei der der erste Folgerbereich (48) in einer Hubendposition der Rädermittel (11) angeordnet ist, die der ausgezogenen nicht aktivierten Position des Unterbrechers (3) entspricht, und wobei der zweite Folgerbereich (49) von der Hubendposition in Richtung auf das Innere des Schaltgetriebes (2) beabstandet ist.

9. Verriegelungsvorrichtung nach Anspruch 8, bei der der erste Folgerbereich (48) und der zweite Folgerbereich (49) beweglich sind, um teilweise in das Schienenelement (7) durch die betreffenden Durchlassöffnungen (52, 54) des letzteren vorzustehen, um zu einer Zeit die Rädermittel (11) zu berühren.

10. Verriegelungsvorrichtung nach einem oder mehreren der vorhergehenden Ansprüche, bei der der bewegliche Körper (41) einen Druckbereich (47) mit einer geneigten Kante (53) aufweist, die dazu ausgebildet ist, die Druckaktion auf einen Stiftbereich (34) der Verriegelungseinheit (30) auszuüben, wobei sich der Stiftbereich (34) parallel zu einer Drehachse (13) des Scharniers (12) erstreckt.

11. Verriegelungsvorrichtung nach Anspruch 10, bei der die Verriegelungseinheit (30) einen Gabelendabschnitt (35) aufweist, durch den sich der Stiftbereich (34) erstreckt, wobei der Gabelendbereich (35) einen Spalt definiert, um den Druckbereich (47) aufzunehmen.

12. Verriegelungsvorrichtung nach einem oder mehreren der Ansprüche 2 bis 9, bei der das Federmittel eine Torsionsfeder (14) aufweist, die um das Scharnier (12) herum angeordnet ist.

13. Schaltgetriebegehäuse (8), das dazu ausgebildet ist, einen ausziehbaren Unterbrecher (3) aufzunehmen und das eine Verriegelungsvorrichtung (1) gemäß einem oder mehreren der vorhergehenden Ansprüche aufweist.

14. Schaltgetriebevorrichtung mit einem ausziehbaren Unterbrecher (3) und einer Verriegelungsvorrichtung (1) gemäß einem oder mehreren der vorhergehenden Ansprüche.

## Revendications

1. Dispositif de verrouillage (1) adapté pour une porte (4) d'un appareillage de commutation (2) équipé d'un disjoncteur extractible (3), comprenant :
- une unité de verrouillage (30) qui est mobile entre une position de verrouillage et une position de déverrouillage pour empêcher et permettre l'ouverture de ladite porte (4), respectivement,
- une unité d'entraînement (40) agencée pour agir sur ladite unité de verrouillage (30) lors d'un mouvement dudit disjoncteur extractible (3),
- ladite unité d'entraînement (40) étant configurée pour placer ladite unité de verrouillage (30) dans ladite position de déverrouillage lorsque ledit disjoncteur extractible (30) est dans une position non fonctionnelle extraite, et pour permettre le positionnement de ladite unité de verrouillage (30) dans ladite position de verrouillage lors d'un mouvement dudit disjoncteur extractible (3) de ladite position non fonctionnelle extraite vers une position fonctionnelle insérée,
**caractérisé en ce que** ladite unité d'entraînement (40) comprend un corps mobile (41) conçu pour exercer une action de poussée sur ladite unité de verrouillage (30) pour maintenir ladite unité de verrouillage (30) dans ladite position de déverrouillage, ledit corps mobile (41) comprenant des moyens suiveurs (48, 49) appropriés pour être déplacés par des moyens à roue (11) d'un chariot (6) conçu pour porter ledit disjoncteur extractible (3), ledit corps mobile (41) pouvant être déplaçé le long d'une direction d'entraînement (42) transversalement par rapport à un chemin des moyens à roue (11) le long d'un élément de rail (7) entre une position relevée correspondant à la position de déverrouillage de l'unité de verrouillage (30), et une position abaissée permettant à l'unité de verrouillage (30) de réaliser la position de verrouillage.

2. Dispositif de verrouillage selon la revendication 1, dans lequel ladite unité de verrouillage (30) est mobile en pivotement, entre ladite position de verrouillage et ladite position de déverrouillage, autour d'un axe d'articulation (12) pouvant être fixé sur un élément de châssis dudit appareillage de commutation (2) transversalement à une direction de coulissement dudit disjoncteur extractible (3), un moyen de ressort (14) étant prévu pour solliciter ladite unité de verrouillage (30) dans ladite position de verrouillage.

3. Dispositif de verrouillage selon la revendication 2, dans lequel ladite unité de verrouillage (30) est configuré pour se coupler à un dispositif de crochet (15') de ladite porte (4) lorsque ladite porte (4) se trouve en position fermée, ledit dispositif de crochet (15') dans ladite position fermée s'engageant dans un moyen d'ouverture fixe (16) prévu sur ledit appareillage de commutation (2).

4. Dispositif de verrouillage selon la revendication 3, dans lequel sur ladite unité de verrouillage (30) est prévu une portée de verrouillage (33) d'une forme permettant de loger et de bloquer ledit dispositif de crochet (15') afin d'empêcher le relevage et l'ouverture de ladite porte (4).

5. Dispositif de verrouillage selon l'une ou plusieurs des revendications précédentes, dans lequel ledit corps mobile (41) est relié de manière coulissante à une contre-plaque de guidage fixe (43) qui est solidarisable à l'élément de rail (7) le long duquel lesdits moyens à roue (11) se déplacent.

6. Dispositif de verrouillage selon la revendication 5, dans lequel sur ledit corps mobile (41) sont prévus des ouvertures à fentes (45) lesquelles logent des moyens de vis de raccordement (46) par lesquels ledit corps mobile (41) est relié de façon coulissante à ladite contre-plaque de guidage (43).

7. Dispositif de verrouillage selon l'une ou plusieurs des revendications 4 à 6, dans lequel lesdits moyens suiveurs comprennent une première portion suiveuse (48) et une seconde portion suiveuse (49) qui sont mobiles dans une zone supérieure et dans une zone inférieure dudit élément de rail (7), respectivement, ladite première portion suiveuse (48) étant agencée pour recevoir une poussée vers le haut par lesdits moyens à roue (11) afin de solliciter ladite unité de verrouillage (30) dans ladite position de déverrouillage, et ladite seconde portion suiveuse (49) étant agencée pour recevoir une poussée vers le bas par lesdits moyens à roue (11) afin de libérer ladite unité de verrouillage (30) en cessant ladite action de poussée permettant ainsi ladite unité de verrouillage (30) d'atteindre ladite position de verrouillage.

8. Dispositif de verrouillage selon la revendication 7, dans lequel ladite première portion suiveuse (48) se trouve à une position de fin de course desdits moyens à roue (11) correspondant à ladite position non fonctionnelle extraite dudit disjoncteur (3), et ladite seconde portion suiveuse (49) est espacée de ladite position de fin de course vers l'intérieur dudit appareillage de commutation (2).

9. Dispositif de verrouillage selon la revendication 8, dans lequel ladite première portion suiveuse (48) et ladite seconde portion suiveuse (49) sont mobiles pour faire partiellement saillie dans ledit élément de rail (7) à travers des ouvertures de passage respectives (52, 54) de celui-ci afin de rentrer en contact avec, l'une après l'autre, lesdits moyens à roue (11).

10. Dispositif de verrouillage selon l'une ou plusieurs des revendications précédentes, dans lequel ledit corps mobile (41) comprend une portion de poussée (47) ayant un bord incliné (53) conçu pour exercer ladite action de poussée sur une portion de broche (34) de ladite unité de verrouillage (30), ladite portion de broche (34) s'étendant parallèlement à un axe de rotation (13) dudit axe d'articulation (12).

11. Dispositif de verrouillage selon la revendication 10, dans lequel ladite unité de verrouillage (30) comprend une portion se terminant en fourche (35) par laquelle ladite portion de broche (34) s'étend, ladite portion se terminant en fourche (35) formant un écartement pour recevoir ladite portion de poussée (47).

12. Dispositif de verrouillage selon l'une ou plusieurs des revendications 2 à 9, dans lequel ledit moyen de ressort comprend un ressort de torsion (14) agencé autour dudit axe d'articulation (12).

13. Boîtier d'appareillage de commutation (8) adapté pour loger un disjoncteur extractible (3) et comprenant un dispositif de verrouillage (1) selon l'une ou plusieurs des revendications précédentes.

14. Appareillage de commutation comprenant un disjoncteur extractible (3) et un dispositif de verrouillage (1) selon l'une ou plusieurs des revendications précédentes.
